# EUROPÄISCHE PATENTSCHRIFT

(11) **EP 2 921 327 B1**
(45) Veröffentlichungstag und Bekanntmachung des Hinweises auf die Patenterteilung: **02.05.2018**
(21) Anmeldenummer: 15150401.6
(22) Anmeldetag: 08.01.2015
(51) Int. Cl.: B60H 1/00, B60H 1/24

(54) **Fahrerkabine einer land- oder bauwirtschaftlich nutzbaren Arbeitsmaschine**
Driver cabin of a working machine usable in agriculture or civil engineering
Cabine de conducteur d'une machine-outil à usage agricole ou dans les travaux publics

(30) Priorität: 17.03.2014 DE 102014103574
(43) Veröffentlichungstag der Anmeldung: 23.09.2015
(73) Patentinhaber: CLAAS Tractor S.A.S., 78141 Vélizy-Villacoublay Cedex (FR)
(72) Erfinder: Faure, Yannick, 92100 Boulogne-Billancourt (FR)
(74) Vertreter: Budach, Steffen

(56) Entgegenhaltungen:
- EP-A2- 2 371 587
- EP-B1- 2 172 353
- US-A- 4 088 364

## Beschreibung

Die Erfindung betrifft gemäß dem jeweiligen Oberbegriff der Patentansprüche 1 und 3 eine Fahrerkabine einer land- oder bauwirtschaftlich nutzbaren Arbeitsmaschine mit zwei in deren Frontbereich vorgesehenen A-Säulen sowie mit zumindest zwei zu diesen beabstandet verlaufenden Säulen, wobei alle Säulen im Wesentlichen vertikal angeordnet sind und ein Kabinendach aufnehmen, und mit einem System zur Zuführung von Frischluft in die Fahrerkabine und zu deren gezielter Verteilung im Inneren der Fahrerkabine, wobei ein Gebläse die Frischluft in Luftverteilkanäle fördert, die sich entlang jeder der A-Säulen erstrecken und mit Luftaustrittsöffnungen zum Strömen der Frischluft in das Innere der Fahrerkabine versehen sind.

Land- oder bauwirtschaftlich nutzbare Arbeitsmaschinen werden im Allgemeinen mit Fahrerkabinen ausgerüstet, welche eine die Arbeitsmaschine bedienende Person vor Wettereinflüssen, Lärmemission, Schwingungen der Arbeitsmaschine, hohen Außentemperaturen, Sonneneinstrahlung und Staub schützen. Entsprechende Fahrerkabinen sollen eine gute Rundumsicht, unter anderem auch auf an die Arbeitsmaschine angekuppelten Arbeitsgeräte, die zumeist in einer unterhalb der Ebene der Fahrerkabine liegenden Ebene betrieben werden, zulassen. Aus diesem Grund sind entsprechende Fahrerkabinen bei land- oder bauwirtschaftlichen Traktoren oder Systemfahrzeugen häufig vollverglast ausgebildet. Fahrerkabinen von selbstfahrenden Mähdreschern sind zumeist nur im Front- und Seitenbereich verglast, da die Fahrerkabine in ihrem Heckbereich unmittelbar an einen Korntank angrenzt.

Für alle Fahrerkabinen gilt, dass deren Inneres mit einer ausreichenden Frischluftmenge versorgt werden muss, um eine Ermüdung des Fahrers zu vermeiden. Des Weiteren wird mittels der Frischluft und eventuell eines verwendeten Umluftstromes in Abhängigkeit von einem Istwert der Außentemperatur und einem eingestellten Sollwert der Innentemperatur durch ein Klimagerät ein entweder gekühlter oder erwärmter Luftstrom erzeugt, der für möglichst gleichmäßige Temperaturbedingungen in der Fahrerkabine sorgt. Zum einen soll in der Fahrerkabine eine optimale Luftverteilung bzw. -zirkulation erzielt werden, und zum anderen ist es erforderlich, ein Beschlagen oder Vereisen der Scheiben der Fahrerkabine zu verhindern bzw. die Feuchtigkeit, die sich an der Scheibe niedergeschlagen hat, von dieser durch einen entsprechenden Luftstrom zu entfernen. Zu diesem Zweck muss die Frischluft in bestimmten Regionen der Fahrerkabine gezielt zugeführt werden.

Eine Fahrerkabine der im Oberbegriff des Patentanspruchs 1 angegebenen Gattung ist aus der EP 2 172 353 B1 bekannt. Dabei sind Lufteintritte für eine mit einem Gebläse versehene Klimaanlage an einer Heckscheibe der Fahrerkabine vorgesehen. Zwei Luftansaugstutzen mit einer insgesamt rechteckigen Außenkontur sind vom Inneren der Fahrerkabine aus auf die Heckscheibe aufgesetzt und stehen über Ansaugleitungen mit der Klimaanlage in Verbindung. An den hinteren Säulen der Fahrerkabine, die in diesem Fall als B-Säulen ausgebildet sind, verlaufen aus rohrförmigen Profilen hergestellte Leitungsabschnitte, die Luftkanäle bilden. Diese rohrförmigen Leitungsabschnitte weisen jeweils eine radial zur Mitte der Fahrerkabine hin oder auf eine benachbarte Scheibe orientierte Ausströmöffnung auf und sind über erste Luftleitungen mit ersten Luftauslässen der Klimaanlage verbunden. Weiterhin sind zweite Luftauslässe der Klimaanlage mit vertikal verlaufenden Leitungsabschnitten verbunden, die einen kreisförmigen Querschnitt aufweisen und über Befestigungslaschen an den beiden vorderen A-Säulen fixiert sind, wobei von Ihnen ebenfalls radial zur Mitte der Fahrerkabine oder auf eine benachbarte Scheibe gerichtete Ausströmöffnungen ausgehen.

Weiterhin ist aus der EP 2 349 752 B1 eine Fahrerkabine bekannt, die im Kabinendach vorgesehene Luftansaugöffnungen aufweist. Die Frischluft wird in diesem Fall über im Kabinendach vorgesehene Luftführungen und sich daran in Strömungsrichtung anschließende hohle B-Säulen einer HVAC-Einheit zugeführt. Die in dieser aufbereitete Frischluft wird von dieser aus über ein Luftführungssystem, das in einem hohl ausgebildete Kabinenboden vorgesehen ist, Defrosterdüsen zugeführt, die im Bereich eines Armaturenbretts der Arbeitsmaschine vorgesehen sind und eine eventuell beschlagene oder vereiste Frontscheibe der Fahrerkabine durch einen entsprechenden Luftstrom von diesen Belägen befreien sollen.

Es ist Aufgabe der vorliegenden Erfindung, ein für eine Fahrerkabine einer land- oder bauwirtschaftlich nutzbaren Arbeitsmaschine vorgesehenes Belüftungssystem und somit Kühlungs- bzw. Heizungssystem derart auszubilden und an dieser anzuordnen, dass für den Fahrer bei allen klimatischen Bedingungen eine angenehme Luftströmung erzielt wird. Außerdem sollen entsprechende Luftführungen mit in die Gestaltung des Kabineninneren einbezogen werden.
Diese Aufgabe wird, ausgehend vom Oberbegriff des Patentanspruchs 1, durch dessen kennzeichnende Merkmale gelöst. Danach ist jeder der Luftverteilkanäle in einem Verkleidungselement ausgebildet, das der jeweiligen A-Säule zugeordnet ist. Jede der beiden Luftverteilungsleitungen ist somit als relativ flaches Verkleidungselement ausgebildet, das die Breitenabmessungen der zugeordneten A-Säule in Richtung des Kabineninneren nur geringfügig vergrößert und somit den Ein- und Ausstieg der Fahrerkabine nicht behindert. Dieses Verkleidungselement kann dabei in vorteilhafter Weise an das Interieur des Kabineninneren angepasst sein. Gemäß der Erfindung ist dabei vorgesehen, dass das Verkleidungselement einen im Querschnitt gesehen U-förmigen Wandverlauf mit Seitenwänden und einer diese miteinander verbindenden Vorderwand aufweist, dass zur Bildung eines Luftverteilkanals die Seitenwände mit Abstand zu deren Rändern über ein als flaches Profil ausgebildetes Abdeckelement miteinander verbunden sind und dass die über das Abdeckelement vorstehenden Ränder zur Fixierung des Verkleidungselements an der jeweiligen A-Säule dienen. Das entsprechende Verkleidungselement ist über seine Ränder, die als Clip-Verbindung wirken, auf die A-Säule aufgeschnappt. Dabei kann das Verkleidungselement im Übrigen hinsichtlich seiner Gestaltung ein einheitliches Design mit weiteren Verkleidungsteilen des Kabineninnenraums aufweisen. Zumindest einige der an den beiden Luftverteilungsleitungen vorgesehenen Luftaustrittsöffnungen sind derart angeordnet, dass die gekühlte oder erwärmte Frischluft den Fahrer im Kopfbereich anströmt. Ein zwischen dem Abdeckelement und der jeweiligen A-Säule gebildeter Kanal kann dabei zur Aufnahme von Kabeln dienen.
Demgegenüber sind nach der EP 2 172 353 B1 als rohrförmige Elemente mit einem kreisförmigen Querschnitt ausgebildete Luftverteilungsleitungen vorgesehen, die über Laschen an den A-Säulen befestigt werden. Diese rohrförmigen Elemente stellen zum einen eine erhebliche Behinderung beim Ein-oder Ausstieg in die Fahrerkabine dar, zum anderen können sie auch die Sicht auf die im Frontbereich der Arbeitsmaschine angebauten Arbeitsgeräte beeinträchtigen. Die rohrförmigen Elemente sind außerdem nicht dazu geeignet, neben der Frischluft Kabel zu führen.

Bei der weiteren eingangs zitierten Druckschrift EP2 349 752 B1 sind die Luftaustrittsöffnungen im Bereich des Armaturenbretts der Arbeitsmaschine vorgesehen. Folglich wird bei hohen Außentemperaturen im Sommer keine ausreichende Kühlung des Fahrers im Bereich seines Gesichts bzw. Oberkörpers erzielt. Hat er aus diesem Grund jedoch die Innentemperatur durch eine entsprechende Verstellung reduziert, so strömt ihn die kalte Luft auch im unteren Kabinenbereich an, was als unangenehm empfunden wird und eventuell zu Erkältungskrankheiten führt.
Gemäß einer weiteren erfindungsgemäßen Lösung der vorgenannten Aufgabe nach dem abhängigen Patentanspruch 2 soll das Gebläse unterhalb eines Fahrersitzes angeordnet sein und von diesem zumindest eine Luftleitung in Richtung eines Fußraumes der Fahrerkabine verlaufen, über die ein steuerbarer Teilluftstrom der vom Gebläse geförderten Frischluft in den Fußraum gefördert wird. Dadurch lässt sich mittels einer optimalen Luftverteilung im Kabineninneren ein für den Fahrer unter allen Bedingungen günstiges Raumklima erzielen.

Weiterhin ist im Zusammenhang mit der Erfindung vorgesehen, dass das Abdeckelement mit den Seitenwänden stoffschlüssig verbunden ist. Dabei kann das als flaches Profil ausgebildete Abdeckelement aus einem schmalen Blechstreifen hergestellt und an seinen Längsseiten mit den Seitenwänden des ebenfalls aus Blech mittels eines spanlosen Formgebungsprozesses hergestellten Verkleidungselements verschweißt sein. Alternativ dazu besteht natürlich auch die Möglichkeit, sowohl das Verkleidungselement als auch das Abdeckelement aus Kunststoff herzustellen, wobei diese Elemente dann über ein Klebeverfahren aneinander befestigt sein können.
Weiterhin sollen die Luftaustrittsöffnungen in den Seitenwänden und/oder der Vorderwand des Verkleidungselements angeordnet und mit Einrichtungen zur Veränderung der Luftströmung versehen sein. Wenn sowohl in der Vorderwand als auch in den Seitenwänden entsprechende Luftaustrittsöffnungen vorgesehen sind, so kann sowohl eine gezielte Luftströmung in Richtung des Fahrers als auch eine Luftströmung, die auf die Innenseiten der Frontscheibe und/oder der Seitenscheiben gerichtet ist, erzielt werden. Die Einrichtungen zur Veränderung der Luftströmung können entweder mechanisch oder elektrisch betätigt werden, wobei entsprechende Leitungen vorzugsweise in dem zwischen dem Abdeckelement und der jeweiligen A-Säule gebildeten Zwischenraum angeordnet sind.

Außerdem ist vorgesehen, dass die Vorderwand jedes der Verkleidungselemente dem Fahrer der Arbeitsmaschine zugewandt ist und dass in der Vorderwand zumindest eines der Verkleidungselemente eine Öffnung zur Aufnahme eines Displays vorgesehen ist. Es kann sich um ein Display handeln, das bezüglich seiner Breitenabmessung an die Breite der Vorderwand des Verkleidungselements angepasst ist. Dieses Display, mittels dessen wichtige Informationen an den Fahrer übermittelt werden, weist somit eine Position in Sichthöhe auf, so dass der Fahrer für ein Ablesen der Informationen seinen Blick nicht senken muss. Mittels eines entsprechenden Displays können beispielsweise Informationen über die Fahrgeschwindigkeit der Arbeitsmaschine, die Zapfwellendrehzahl, die eingelegte Gangstufe, Informationen betreffend die jeweilige Funktion des angebauten Arbeitsgeräts usw. an den Fahrer übermittelt werden. Zur Aufnahme des Displays ist das Verkleidungselement über den innerhalb dieser gebildeten Luftverteilkanal hinaus verlängert, und das Abdeckelement wird an seinem dem Display benachbarten Ende in Richtung der Vorderwand umgebogen, um das Ende des Luftverteilkanals zu verschließen.

Alternativ dazu oder in Kombination mit der Anordnung eines entsprechenden Displays können in der Vorderwand auch in einer Öffnung Bedienungselemente der Arbeitsmaschine vorgesehen sein. Da, wie bereits dargelegt, der Zwischenraum zwischen dem Abdeckelement und der A-Säule als Kanal für elektrische Leitungen bzw. Datenleitungen geeignet ist, können diese wahlweise bis in den Bereich des Displays oder der Bedienungselemente geführt werden. Mittels des Kanals wird außerdem eine thermische Isolierung des jeweiligen Luftverteilkanals erzielt, da die Frischluft nicht in Kontakt mit der entweder sehr kalten oder stark erwärmten A-Säule gelangen kann. Unter Umständen kann es auch sinnvoll sein, in diesem Zwischenraum eine Isolierung vorzusehen.

In weiterer Ausgestaltung der Erfindung ist vorgesehen, dass das Gebläse unterhalb eines in der Fahrerkabine angeordneten Fahrersitzes angeordnet ist und die Frischluft über im Kabinendach angeordnete Luftzufuhröffnungen sowie zumindest einen innerhalb einer der hinteren Säulen oder parallel zu den hinteren Säulen verlaufenden Ansaugkanal ansaugt. Die Frischluft gelangt somit an einer Stelle in das Belüftungssystem der Fahrerkabine, an der in der Regel die Belastung der Frischluft mit großen Schmutzpartikeln deutlich geringer ist als im unteren Bereich der Fahrerkabine. Dabei soll den Luftzufuhröffnungen ein Vorfilter zugeordnet sein, über den diese groben Schmutzpartikel, soweit vorhanden, aus der Frischluft herausgefiltert werden. Ein entsprechender Vorfilter soll derart im Dachbereich angeordnet sein, dass dessen Reinigung in bestimmten Wartungsintervallen problemlos durchgeführt werden kann. Der Vorfilter kann aber auch als ein die entsprechende Luftzufuhröffnung nach außen hin abdeckendes Gitter, Lochblech usw. ausgebildet sein.

In vorteilhafter Weise strömt die Frischluft, die über das Gebläse angesaugt wird, anschließend über die vorzugsweise hohl ausgebildeten hinteren Säulen, bei denen es sich, je nach Gestaltung der Fahrerkabine, um die B-Säulen handeln kann. Diese Ansaugkanäle können aber auch durch parallel zu den hinteren Säulen verlaufende Ansaugkanäle gebildet werden. Dabei besteht die Möglichkeit, diese auf die hinteren Säulen aufgesetzten Ansaugkanäle ebenfalls als Verkleidungselemente auszubilden, die in diesem Fall natürlich nicht mit Luftaustrittsöffnungen versehen sind.

Das zuvor erwähnte Gebläse kann die Frischluft über zumindest einen parallel zu einem Kabinenboden verlaufenden Luftführungsabschnitt in die an den A-Säulen angeordneten Luftverteilkanäle fördern. Zu diesem Zweck kann der Kabinenboden doppelwandig ausgebildet und über in den Zwischenraum eingesetzte Trennwände zur entsprechenden Luftführung gestaltet sein.

Weiterhin ist vorgesehen, dass das Gebläse Bestandteil einer Heating-Ventilation and Airconditioning-Einheit (HVAC) ist. Diese Einheit, die beispielsweise als vollautomatische Klimaanlage ausgebildet ist, kann mit einem in dem Verkleidungselement angeordneten Display und/oder entsprechenden Bedienelementen verbunden sein. Weiterhin ist in der ein Klimagerät aufweisenden Einheit ein austauschbarer Feinfilter angeordnet, der die evtl. in der Frischluft noch verbleibenden feineren Schmutzpartikel aus dieser herausfiltert. Die HVAC-Einheit kann im Übrigen mit einer Verkleidung versehen sein, die zum Austausch bzw. zur Reinigung des Feinfilters problemlos geöffnet werden kann.

Schließlich soll von dem Gebläse bzw. einem Wärmetauscher HVAC-Einheit eine separate, mit zumindest einer Austrittsöffnung in Richtung eines Fußraumes der Fahrerkabine weisende Luftleitung ausgehen. Mittels dieser zusätzlichen Luftleitung kann insbesondere bei niedrigen Außentemperaturen ein warmer Luftstrom unterhalb des Fahrersitzes erzielt werden, der in vorteilhafter Weise für angenehme Temperaturen im Fußraum sorgt.
Die Erfindung ist nicht auf die angegebene Kombination der Merkmale des unabhängigen Patentanspruchs 1 und der von diesem abhängigen Patentansprüche beschränkt. Es ergeben sich darüber hinaus Möglichkeiten, einzelne Merkmale, soweit sie aus den Patentansprüchen, hervorgehen, miteinander zu kombinieren. Die Bezugnahme der Patentansprüche auf die Zeichnung durch entsprechende Verwendung vom Bezugszeichen soll den Schutzumfang der Patentansprüche nicht beschränken.
Zur weiteren Erläuterung der Erfindung wird auf die Zeichnung verwiesen, in der drei Ausführungsbeispiele vereinfacht dargestellt sind. Es zeigen:
- Figur 1: als schematische Darstellung eine perspektivische Darstellung eines land- oder bauwirtschaftlich nutzbaren Arbeitsfahrzeugs mit einem Teilschnitt durch ein Kabinendach und eine hintere Säule einer Fahrerkabine,
- Figur 2: eine Teilansicht im Inneren der Fahrerkabine mit einem Schnitt durch eine HVAC-Einheit sowie eines Teilabschnitts eines Kabinenbodens,
- Figur 3: eine perspektivische Ansicht einer ersten Ausführungsform eines Verkleidungselements,
- Figur 4: eine perspektivische Darstellung einer zweiten Ausführungsform eines Verkleidungselements, in welches ein Display eingesetzt ist,
- Figur 5: eine perspektivische Ansicht auf ein Heck einer Rahmenkonstruktion einer Fahrerkabine,
- Figur 6: eine perspektivische Ansicht auf eine offene Längsseite des nach der Figur 3 ausgebildeten Verkleidungselements,
- Figur 7: eine dritte Ausführungsform eines Verkleidungselements mit einem Display und
- Figur 8: eine Ansicht auf eine offene Seite des Verkleidungselements nach der Figur 7, die eine Öffnung zur Aufnahme des Displays zeigt.

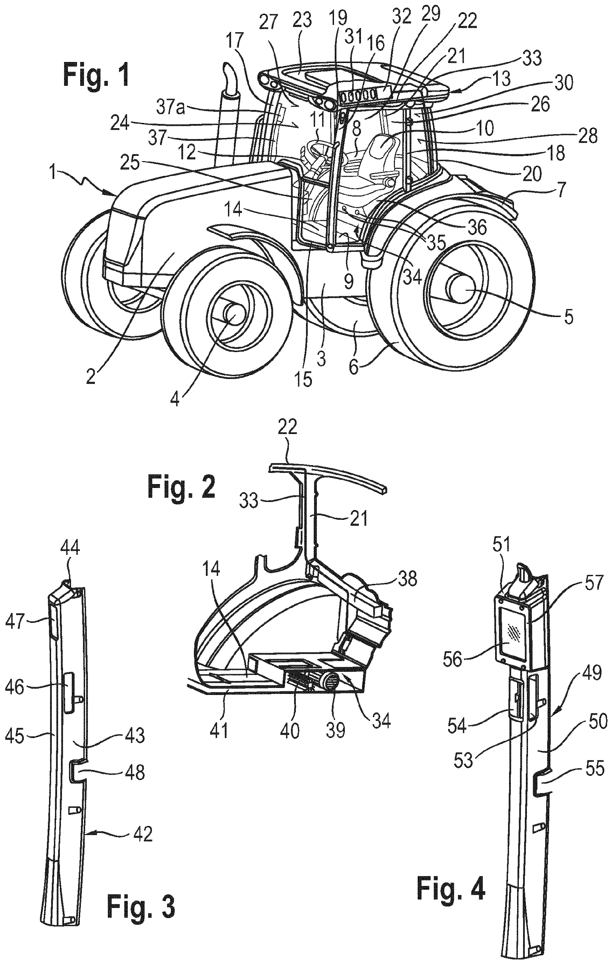

In der Figur 1 ist eine als landwirtschaftlicher Traktor 1 ausgebildete Arbeitsmaschine dargestellt, die in Blockbauweise ausgebildet ist. Dabei ist ein Motorgehäuse 2 einer Brennkraftmaschine des Traktors 1 mit einem Getriebe- und Hinterachsgehäuse 3 verbunden. In seinem Frontbereich weist der Traktor 1 eine Vorderachse 4 auf, die über ein nicht näher dargestelltes Vorderachsgehäuse am Motorgehäuse 2 befestigt ist. Im Heckbereich des Traktors 1 gehen von dem Getriebe- und Hinterachsgehäuse 3 zwei Radachsen aus, von denen in der Darstellung nach der Figur 1 nur eine Radachse 5 sichtbar ist. Die Radachsen treiben dabei Hinterräder 6 an, die beidseitig des Traktors 1 über einen Teil ihres Außenumfangs von Kotflügeln 7 und 8 abgedeckt sind, wobei die Kotflügel 7 und 8 gemeinsam mit einem Fahrerstand 9 ausgebildet sind. Auf diesem Fahrerstand 9, der gemeinsam mit den Kotflügeln 7 und 8 ausgebildet ist, sind unter anderem ein Fahrersitz 10, eine Lenkeinrichtung 11 sowie eine Anzeige- und Bedieneinheit 12 angeordnet.

Eine Fahrerkabine 13 des Traktors 1 bildet mit dem Fahrerstand 9 eine Einheit, die gegenüber dem sie tragenden Getriebe- und Hinterachsgehäuse 3 über nicht näher dargestellte Elemente federnd bzw. schwingungsdämpfend gelagert ist. Daher wird von dem Fahrerstand 9 ein Kabinenboden 14 gebildet, und untere Rahmenteile 15 der Fahrerkabine 13 umschließen zum Teil den Kabinenboden 14 und sind in anderen Bereichen oberhalb der Kotflügel 7 und 8 geführt. Von den unteren Rahmenteilen 15 gehen im Frontbereich der Fahrerkabine 13 im Wesentlichen vertikal verlaufende A-Säulen 16 und 17 aus, zu denen beabstandet B-Säulen 18 und 19 und schließlich am Heck der Fahrerkabine 13 hintere Säulen 20 und 21 verlaufen.

Die Säulen 16 bis 21 sind an ihren oberen Enden über obere Rahmenteile 22 miteinander verbunden, wobei diese oberen Rahmenteile 22 umlaufend ausgebildet sind und ein Kabinendach 23 aufnehmen. Wie weiterhin aus der Figur 1 hervorgeht, ist die Fahrerkabine 13 rundherum verglast, d. h., sie weist eine Frontscheibe 24 und von dieser durch Querrahmen abgetrennte, im Fußraum befindliche vordere Frontscheibenteile 25 auf. Weiterhin ist auf beiden Seiten der Fahrerkabine 1 jeweils eine verglaste Kabinentür 26 und 27 vorgesehen, die, wie aus der perspektivischen Darstellung hervorgeht, jeweils schwenkbar an der B-Säule 18 bzw. 19 gelagert ist und an die entsprechende A-Säule 16 bzw. 17 anschlägt. Hinter den verglasten Kabinentüren 26 und 27 befinden sich zwischen der jeweiligen B-Säule 18 bzw.19 und der entsprechenden hinteren Säule 20 bzw. 21 Seitenfenster 28 und 29. Schließlich ist die Fahrerkabine 13 auf ihrer Heckseite, also in dem zwischen den hinteren Säulen 20 und 21 liegenden Bereich durch eine Heckscheibe 30 verschlossen, die zur Verbesserung der Sicht auf im Heckbereich der Fahrerkabine 13 angebaute Arbeitsgeräte bis an den Kabinenboden 14 reichen kann.

Weiterhin geht aus der Figur 1 hervor, dass das Kabinendach 23 an einer Seite Luftzufuhröffnungen 31 angeordnet sind, denen ein Vorfilter 32 sowie zumindest ein Ansaugkanal 33 nachgeordnet sind. Dieser Ansaugkanal 33 kann dabei zunächst durch einen Abschnitt der Rahmenteile 22 und schließlich durch zumindest eine der hinteren Säulen 20 bzw. 21 verlaufen. Weiterhin geht aus der Darstellung hervor, dass unterhalb des Fahrersitzes eine HVAC-Einheit 34 angeordnet ist. Dabei befindet sich zwischen der HVAC-Einheit 34 und dem Fahrersitz 10 ein mit Luftaustrittsöffnungen 35 versehener Gehäuseteil 36. Wie weiterhin zu erkennen ist, befindet sich an der, in Fahrtrichtung gesehen, rechten A-Säule 17 ein Verkleidungselement 37, das im Zusammenhang mit den nachfolgenden Figuren noch näher erläutert werden wird und ein Display 37a aufnimmt.

Zunächst sei im Zusammenhang mit der Figur 2 erläutert, wie die über die Luftzufuhröffnungen 31 nach der Figur 1 zugeführte Frischluft über einen in Längsrichtung der Fahrerkabine 13 verlaufenden Abschnitt der oberen Rahmenteile 22 in die HVAC-Einheit 34 geführt wird. Dabei sind die für die Führung der Frischluft vorgesehenen Abschnitte der Rahmenteile 22 sowie die hintere Säule 21 hohl ausgebildet, so dass der Ansaugkanal 33 gebildet wird. Die Frischluft wird schließlich über eine hintere Querstrebe 38und einen Teil des rechten Kotflügels 8 in die HVAC-Einheit 34 geführt. Die HVAC-Einheit 34 weist ein Gebläse 39 und ein nicht näher dargestelltes Feinfilter auf. Außerdem verlaufen innerhalb der HVAC-Einheit 34 Wärmetauscher 40, über die die Frischluft entweder abgekühlt oder erwärmt wird. Ein Teil der entsprechend behandelten Frischluft kann dabei in vertikaler Richtung nach oben gefördert werden und gelangt somit in die im Gehäuseteil 36 nach Figur 1 vorgesehenen Luftaustrittsöffnungen 35, so dass die Fahrerkabine 13 im Fußraum mit gekühlter oder erwärmter Luft durchströmt werden kann. Weiterhin geht aus der Figur 2 hervor, dass der Kabinenboden 14 doppelwandig ausgebildet ist, wodurch zumindest eine in den vorderen Bereich der Fahrerkabine 13 verlaufende Luftleitung 41 gebildet wird.
In den Figuren 3, 4, 6, 7 und 8 sind unterschiedliche Varianten eines Verkleidungselements der beiden A-Säulen 16 und 17 dargestellt. Eine erste Variante eines Verkleidungselements 42 nach der Figur 3 weist dabei einen U-förmigen Querschnitt auf, wobei Seiteinwände 43 und 44, die zueinander einen gespreizten Verlauf aufweisen, über eine Vorderwand 45 miteinander verbunden sind. Dabei ist das Verkleidungselement 42 vorzugsweise in einem spanlosen Formgebungsprozess hergestellt. Aus der Figur 3 geht weiterhin hervor, dass die Seitenwand 43 eine erste Luftaustrittsöffnung 46, die im montierten Zustand des Verkleidungselements 42 vorzugsweise auf die Frontscheibe 24 der Fahrerkabine 1 gerichtet ist, und eine zweite Luftaustrittsöffnung 47, aus der der Fahrer mit Frischluft versorgt wird, aufweist. Weiterhin befindet sich in der Seitenwand 43 eine Ausnehmung 48, mit der das Verkleidungselement 42 im montierten Zustand ein Anschlussteil der A-Säule 16 oder 17 übergreifen kann.
Das Verkleidungselement 49 nach der Figur 4 weist ebenfalls Seitenwände 50 und 51 auf, die über eine Vorderwand miteinander verbunden sind und in Richtung des von der Vorderwand abgewandten Ende gespreizt verlaufen. In diesem Fall sind ebenfalls in der Seitenwand 50 und in der Vorderwand Luftaustrittsöffnungen 53 und 54 vorgesehen. Außerdem befindet sich in der Seitenwand 50 ebenfalls eine Ausnehmung 55, durch die Anschlusskonstruktionen der Fahrerkabine 1 hindurchgeführt werden können.
Im Unterschied zu der Ausführung nach der Figur 3 ist nach der Figur 4 am oberen Ende des Verkleidungselements 49 in dessen Vorderwand ein Display 56 angeordnet. Zu diesem Zweck ist das Verkleidungselement 49 durch einen spanlosen Formgebungsprozess in seinem das Display 56 aufnehmenden Abschnitt verbreitert ausgebildet, wobei das Display 56 in eine Öffnung 57 eingreift.

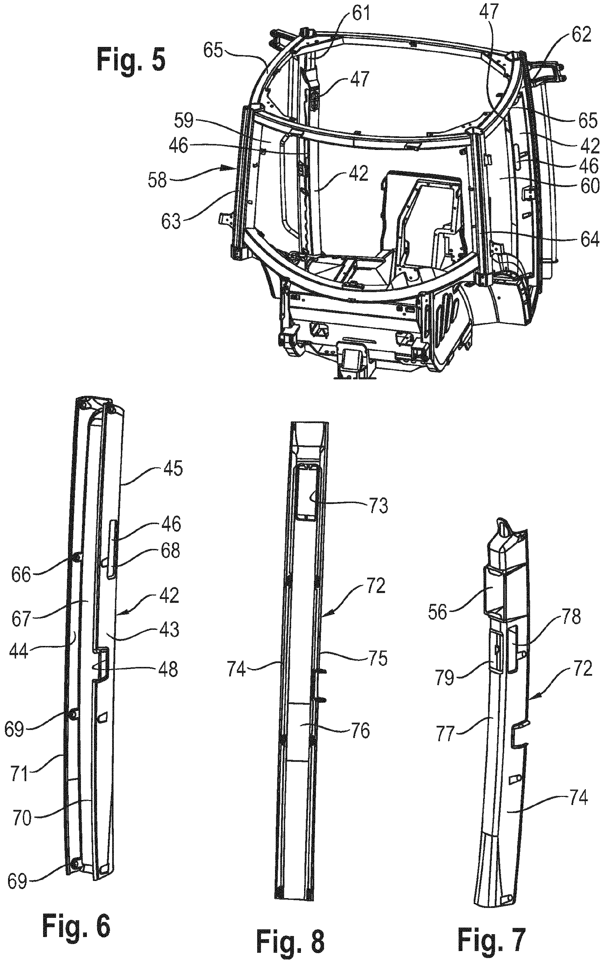

In der Figur 5 ist eine Rahmenkonstruktion einer abweichend von der Fahrerkabine 13 nach Figur 1 ausgebildeten Fahrerkabine 58 dargestellt. Der Unterschied besteht darin, dass sich in diesem Fall die beiden Kabinentüren 59 und 60 über die gesamte Länge der Fahrerkabine 58 erstrecken. Die Fahrerkabine 58 weist folglich zwei A-Säulen 61 und 62 sowie zwei B-Säulen 63 und 64 auf. In Übereinstimmung mit der Ausbildung der Fahrerkabine 1 nach der Figur 1 soll angesaugte Frischluft über obere Rahmenteile 65 und zumindest eine der B-Säulen 63, 64 zu einem entsprechend Figur 2 ausgebildeten HVAC-Gerät geführt werden. In der Darstellung nach der Figur 5 ist an beiden A-Säulen 61 und 62 jeweils ein gemäß Figur 3 ausgebildetes Verkleidungselement 42 vorgesehen, wobei ein unteres Ende dieses Verkleidungselements 42 über die nicht näher dargestellte Luftleitung mit der ebenfalls nicht dargestellten HVAC-Einheit verbunden sein soll.

In der Figur 6 ist das Verkleidungselement 42 der Figur 3 von seiner Rückseite her perspektivisch dargestellt. Dabei ist erkennbar, dass sich zwischen den Seitenwänden 43 und 44 mit Abstand zu deren Ränder ein Abdeckelement 67 erstreckt, das aus einem Flachmaterial hergestellt ist und vorzugsweise mit den Seitenwänden 43 und 44 verschweißt ist. Das Abdeckelement 67 bildet dadurch gemeinsam mit den beiden Seitenwänden 43 und 44 sowie mit der Vorderwand 45 einen Luftverteilkanal 68, von dem in der Figur 6 nur der innerhalb der Luftaustrittsöffnung 46 sichtbare Abschnitt erkennbar ist. Ferner ist das Abdeckelement 67 zur oberen Begrenzung des Luftverteilkanals 68 in Richtung der Vorderwand 45 umgebogen und ebenfalls mit dieser verschweißt. Weiterhin geht aus dieser Figur 6 hervor, dass Ränder 70 und 71 der Seitenwände 43 und 44 derart profiliert sind, dass sie Abschnitte der A-Säulen 16, 17, 61, 62 hintergreifen können und somit das Verkleidungselement 42 entsprechend fixieren. Außerdem sind an den Innenflächen der Seitenwände 43 und 44 Rastelemente 66 und 69 angeordnet, die sich kraft- oder formschlüssig an den A-Säulen 16, 17, 61, 62 festkrallen.

Schließlich zeigen die Figuren 7 und 8 eine weitere Ausgestaltung eines Verkleidungselements 72, zunächst in der Figur 8 mit einer Draufsicht auf dessen offene Seite, wobei deutlich wird, dass in diesem Fall für die Anordnung des Displays 56 oder einer nicht näher dargestellten Bedieneinheit eine Öffnung 73 vorgesehen ist. Ein zwischen Seitenwänden 74 und 75 verlaufendes Abdeckelement 76 erstreckt sich nur bis in den Bereich dieser Öffnung 73 und ist in Richtung einer Vorderwand 77 umgebogen, um einen Luftverteilkanal zu begrenzen. Dadurch ragt das entsprechende Display 56 oder die Bedieneinheit bis in einen hinter dem Abdeckelement liegenden Bereich, der als Kabelkanal ausgebildet ist und durch die entsprechende A-Säule 16, 17, 61, 62 begrenzt wird. Die Figur 7 zeigt eine perspektivische Darstellung dieses Verkleidungselements 72, wobei erkennbar ist, dass in der Seitenwand 74 und in der Vorderwand 77 Luftaustrittsöffnungen 78 und 79 vorgesehen sind.

### Bezugszeichen

- 1: Traktor
- 2: Motor
- 3: Getriebe- und Hinterachsgehäuse
- 4: Vorderachse
- 5: hintere Radachse
- 6: Hinterräder
- 7: Kotflügel
- 8: Kotflügel
- 9: Fahrerstand
- 10: Fahrersitz
- 11: Lenkeinrichtung
- 12: Anzeige und Bedieneinheit
- 13: Fahrerkabine
- 14: Kabinenboden
- 15: untere Rahmenteile
- 16: A-Säule
- 17: A-Säule
- 18: B-Säule
- 19: B-Säule
- 20: hintere Säule
- 21: hintere Säule
- 22: obere Rahmenteile
- 23: Kabinendach
- 24: Frontscheibe
- 25: vordere Frontscheibenteile
- 26: Kabinentür
- 27: Kabinentür
- 28: Seitenfenster
- 29: Seitenfenster
- 30: Heckscheibe
- 31: Luftzufuhröffnungen
- 32: Vorfilter
- 33: Ansaugkanal
- 34: HVAC-Einheit
- 35: Luftaustrittsöffnungen
- 36: Gehäuseteil
- 37: Verkleidungselement
- 37a: Display
- 38: hintere Querstrebe
- 39: Gebläse
- 40: Wärmetauscher
- 41: Luftleitung
- 42: Verkleidungselement
- 43: Seitenwand
- 44: Seitenwand
- 45: Vorderwand
- 46: erste Luftaustrittsöffnungen
- 47: zweite Luftaustrittsöffnungen
- 48: Ausnehmung
- 49: Verkleidungselement
- 50: Seitenwand
- 51: Seitenwand
- 53: Luftaustrittsöffnung
- 54: Luftaustrittsöffnung
- 55: Ausnehmung
- 56: Display
- 57: Öffnung
- 58: Fahrerkabine
- 59: Kabinentür
- 60: Kabinentür
- 61: A-Säule
- 62: A-Säule
- 63: B-Säule
- 64: B-Säule
- 65: obere Rahmenteile
- 66: Rastelement
- 67: Abdeckelement
- 68: Luftverteilkanal
- 69: Rastelement
- 70: Rand
- 71: Rand
- 72: Verkleidungselement
- 73: Öffnung
- 74: Seitenwand
- 75: Seitenwand
- 76: Abdeckelement
- 77: Vorderwand
- 78: Luftaustrittsöffnung
- 79: Luftaustrittsöffnung

## Patentansprüche

1. Fahrerkabine (13, 58) einer land- oder bauwirtschaftlich nutzbaren Arbeitsmaschine (1) mit zwei in deren Frontbereich vorgesehenen A-Säulen (16 und 17, 61 und 62) sowie mit zumindest zwei zu diesen beabstandet verlaufenden Säulen (18, 19, 20, 21, 63, 64), wobei alle Säulen (16, 17, 18, 19, 20, 21, 61, 62, 63, 64) im Wesentlichen vertikal angeordnet sind und ein Kabinendach (23) aufnehmen, und mit einem System zur Zuführung von Frischluft in die Fahrerkabine (13, 58) und zu deren gezielter Verteilung im Inneren der Fahrerkabine (13, 58), wobei ein Gebläse (39) die Frischluft in Luftverteilkanäle (68) fördert, die sich entlang jeder der A-Säulen (16 und 17, 61 und 62) erstrecken und mit Luftaustrittsöffnungen (46, 47, 53, 54, 78, 79) zum Strömen der Frischluft in das Innere der Fahrerkabine (13, 58) versehen sind, **dadurch gekennzeichnet, dass** jeder der Luftverteilkanäle (68) in einem Verkleidungselement (37, 42, 49, 72) ausgebildet ist, das der jeweiligen A-Säule (16 und 17, 61 und 62) zugeordnet ist, wobei das Verkleidungselement (37, 42, 49, 72) einen im Querschnitt gesehen U-förmigen Wandverlauf mit Seitenwänden (43, 44, 50, 51, 74, 75) und einer diese miteinander verbindenden Vorderwand (45, 77) aufweist, dass zur Bildung eines Luftverteilkanals (68) die Seitenwände (43, 44, 50, 51, 74, 75) mit Abstand zu deren Rändern (70 und 71) über ein als flaches Profil ausgebildetes Abdeckelement (67) miteinander verbunden sind und dass die über das Abdeckelement (67) vorstehenden Ränder (70 und 71) zur Fixierung des Verkleidungselements (37, 42, 49, 72) an der jeweiligen A-Säule (16 und 17, 61 und 62) dienen.

2. Fahrerkabine nach Anspruch 1, **dadurch gekennzeichnet, dass** das Gebläse unterhalb eines Fahrersitzes angeordnet ist und von diesem zumindest eine Luftleitung in Richtung eines Fußraumes der Fahrerkabine verläuft, über die ein steuerbarer Teilluftstrom der vom Gebläse geförderten Frischluft in den Fußraum gefördert wird.

3. Fahrerkabine nach Patentanspruch 1, **dadurch gekennzeichnet, dass** das Abdeckelement (67) mit den Seitenwänden (43, 44, 50, 51, 74, 75) stoffschlüssig verbunden ist.

4. Fahrerkabine nach Patentanspruch 1, **dadurch gekennzeichnet, dass** die Luftaustrittsöffnungen (46, 47, 53, 54, 78, 79) in den Seitenwänden (43, 44, 50, 51, 74, 75) und/oder der Vorderwand (45, 77) des Verkleidungselements (37, 42, 49, 72) angeordnet und mit Einrichtungen zur Veränderung der Luftströmung versehen sind.

5. Fahrerkabine nach Patentanspruch 1, **dadurch gekennzeichnet, dass** die Vorderwand (45, 77) jedes der Verkleidungselemente (37, 42, 49, 72) einem Fahrer der Arbeitsmaschine zugewandt ist und dass in der Vorderwand (77) zumindest eines der Verkleidungselemente (49, 72) eine Öffnung (51) zur Aufnahme eines Displays (37a, 56) vorgesehen ist.

6. Fahrerkabine nach Patentanspruch 1, **dadurch gekennzeichnet, dass** die Vorderwand (45, 77) jedes der Verkleidungselemente (37, 42, 49, 72) einem Fahrer der Arbeitsmaschine zugewandt ist und dass in der Vorderwand (45, 77) zumindest eines der Verkleidungselemente (37, 42, 49, 72) eine Öffnung zur Aufnahme eines Bedienungselements der Arbeitsmaschine (1) vorgesehen ist.

7. Fahrerkabine nach einem der Patentansprüche 1 oder 2, **dadurch gekennzeichnet, dass** das Gebläse (39) die Frischluft über im Kabinendach (23) vorgesehene Luftzufuhröffnungen (31) sowie zumindest eines innerhalb einer der hinteren Säulen (20, 21, 63, 64) oder parallel zu den hinteren Säulen verlaufenden Ansaugkanals (33) ansaugt.

8. Fahrerkabine nach einem der Patentansprüche 1 oder 2, **dadurch gekennzeichnet, dass** das Gebläse (39) die Frischluft über zumindest einen parallel zu einem Kabinenboden 14) verlaufenden Luftführungsabschnitt (41) in die an den A-Säulen (16 und 17, 61 und 62) angeordneten Luftverteilkanäle (68) fördert.

9. Fahrerkabine nach Patentanspruch 1, **dadurch gekennzeichnet, dass** den Luftzufuhröffnungen (31) ein Vorfilter (32) zugeordnet ist.

10. Fahrerkabine nach einem der Patentansprüche 1 oder 2, **dadurch gekennzeichnet, dass** das Gebläse (39) Bestandteil einer Heating, Ventilation and Air Conditioning - Einheit (HVAC) (34) ist.

11. Fahrerkabine nach Patentanspruch 10, **dadurch gekennzeichnet, dass** innerhalb der HVAC-Einheit (34) ein austauschbarer Feinfilter angeordnet ist.

12. Fahrerkabine nach Patentanspruch 1, **dadurch gekennzeichnet, dass** von dem Gebläse (39) eine separate, mit zumindest einer Austrittsöffnung (35) in Richtung eines Fußraumes der Fahrerkabine (13, 58) weisende Luftleitung ausgeht.

## Claims

1. A driver's cab (13, 58) of a working machine (1) which can be used in agriculture or the construction industry, comprising two A-pillars (16 and 17, 61 and 62) provided in the front region of the cab, and at least two pillars (18, 19, 20, 21, 63, 64) which extend in spaced relationship with the A-pillars, wherein all pillars (16, 17, 18, 19, 20, 21, 61, 62, 63, 64) are arranged substantially vertically and carry a cab roof (23), and comprising a system for feeding fresh air into the cab (13, 58) and for the targeted distribution thereof in the interior of the cab (13, 58), wherein a fan (39) conveys the fresh air into air distribution passages (68) which extend along each of the A-pillars (16 and 17, 61 and 62), and are provided with air outlet openings (46, 47, 53, 54, 78, 79) for the flow of the fresh air into the interior of the cab (13, 58), **characterised in that** each of the air distribution passages (68) is provided in a cladding element (37, 42, 49, 72) associated with the respective A-pillar (16 and 17, 61, and 62), wherein the cladding element (37, 42, 49, 72) has a wall configuration which is U-shaped as viewed in cross-section with side walls (43, 44, 50, 51, 74, 75) and a front wall (45, 77) connecting same together, that to form an air distribution passage (68) the side walls (43, 44, 50, 51, 74, 75) are connected together at a spacing relative to the edges thereof (70 and 71) by way of a cover element (67) in the form of a flat profile member and that the edges (70 and 71) projecting beyond the cover element (67) serve for fixing the cladding element (37, 42, 49, 72) to the respective A-pillar (16 and 17, 61 and 62).

2. A driver's cab according to claim 1 **characterised in that** the fan is arranged beneath a driver's seat and at least one air conduit extends therefrom in the direction of a foot space of the driver's cab and by way of which a controllable air flow portion of the fresh air conveyed by the fan is conveyed into the foot space.

3. A driver's cab according to claim 1 **characterised in that** the cover element (67) is connected to the side walls (43, 44, 50, 51, 74, 75) in material-bonded relationship.

4. A driver's cab according to claim 1 **characterised in that** the air outlet openings (46, 47, 53, 54, 78, 79) are arranged in the side walls (43, 44, 50, 51, 74, 75) and/or the front wall (45, 77) of the cladding element (37, 42, 49, 72) and are provided with devices for varying the air flow.

5. A driver's cab according to claim 1 **characterised in that** the front wall (45, 77) of each of the cladding elements (37, 42, 49, 72) is towards a driver of the working machine and that an opening (51) for accommodating a display (37a, 56) is provided in the front wall (77) of at least one of the cladding elements (49, 72).

6. A driver's cab according to claim 1 **characterised in that** the front wall (45, 77) of each of the cladding elements (37, 42, 49, 72) is towards a driver of the working machine and that an opening for accommodating an operating element of the working machine (1) is provided in the front wall (45, 77) of at least one of the cladding elements (37, 42, 49, 72).

7. A driver's cab according to one of claims 1 and 2 **characterised in that** the fan (39) draws in the fresh air by way of air feed openings (31) provided in the cab roof (23) and at least one intake passage (33) which extends within one of the rear pillars (20, 21, 63, 64) or parallel to the rear pillars.

8. A driver's cab according to one of claims 1 and 2 **characterised in that** the fan (39) conveys the fresh air by way of at least one air guide portion (41) extending parallel to a cab floor (1) into the air distribution passages (68) arranged at the A-pillars (16 and 17, 61 and 62).

9. A driver's cab according to claim 1 **characterised in that** a preliminary filter (32) is associated with the air feed openings (31).

10. A driver's cab according to one of claims 1 and 2 **characterised in that** the fan (39) is a component part of a heating, ventilation and air conditioning unit (HVAC) (34).

11. A driver's cab according to claim 10 **characterised in that** a replaceable fine filter is arranged within the HVAC unit (34).

12. A driver's cab according to claim 1 **characterised in that** a separate air conduit facing with at least one outlet opening (35) in the direction of a foot space of the driver's cab (13, 58) extends from the fan (39).

## Revendications

1. Cabine de conduite (13, 58) d'une machine de travail utilisable en agriculture ou dans les travaux publics (1), comprenant deux colonnes A (16 et 17, 61 et 62) prévues dans sa zone avant ainsi qu'au moins deux colonnes (18, 19, 20, 21, 63, 64) s'étendant à distance de celles-ci, toutes les colonnes (16, 17, 18, 19, 20, 21, 61, 62, 63, 64) étant disposées sensiblement verticalement et recevant un toit de cabine (23), et comprenant un système pour amener de l'air frais dans la cabine de conduite (13, 58) et pour le répartir de manière ciblée à l'intérieur de la cabine de conduite (13, 58), une soufflante (39) refoulant l'air frais dans des canaux de répartition d'air (68) qui s'étendent le long de chacune des colonnes A (16 et 17, 61 et 62) et étant munis d'ouvertures de sortie d'air (46, 47, 53, 54, 78, 79) pour introduire de l'air frais à l'intérieur de la cabine de conduite (13, 58), **caractérisée en ce que** chacun des canaux de répartition d'air (68) est ménagé dans un élément de garniture (37, 42, 49, 72) qui est associé à la colonne A respective (16 et 17, 61 et 62), l'élément de garniture (37, 42, 49, 72) présentant un tracé de paroi en U, vu en coupe transversale, avec des parois latérales (43, 44, 50, 51, 74, 75) et avec une paroi avant (45, 77) reliant celles-ci entre elles, **en ce que**, pour former un canal de répartition d'air (68), les parois latérales (43, 44, 50, 51, 74, 75) sont reliées, à distance de leurs bords (70 et 71), par l'intermédiaire d'un élément de recouvrement (67) conformé en profilé plat, et **en ce que** les bords (70 et 71) dépassant de l'élément de recouvrement (67) servent à fixer l'élément de garniture (37, 42, 49, 72) à la colonne A respective (16 et 17 61 et 62).

2. Cabine de conduite selon la revendication 1, **caractérisée en ce que** la soufflante est disposée au-dessous du siège conducteur et, à partir de celui-ci, s'étend, en direction d'une zone de pieds de la cabine de conduite, au moins une conduite d'air par l'intermédiaire de laquelle un courant d'air partiel modulable de l'air frais refoulé par la soufflante est refoulé dans la zone de pieds.

3. Cabine de conduite selon la revendication 1, **caractérisée en ce que** l'élément de recouvrement (67) est relié aux parois latérales (43, 44, 50, 51, 74, 75) par conjugaison de matières.

4. Cabine de conduite selon la revendication 1, **caractérisée en ce que** les ouvertures de sortie d'air (46, 47, 53, 54, 78, 79) sont disposées dans les parois latérales (43, 44, 50, 51, 74, 75) et/ou dans la paroi avant (45, 77) de l'élément de garniture (37, 42, 49, 72) et sont munies d'agencements pour modifier l'écoulement d'air.

5. Cabine de conduite selon la revendication 1, **caractérisée en ce que** la paroi avant (45, 77) de chacun des éléments de garniture (37, 42, 49, 72) est tourné vers le conducteur de la machine de travail, et **en ce que** dans la paroi avant (77) d'au moins un des éléments de garniture (49, 72) est prévue une ouverture (51) pour recevoir un affichage (37a, 56).

6. Cabine de conduite selon la revendication 1, **caractérisée en ce que** la paroi avant (45, 77) de chacun des éléments de garniture (37, 42, 49, 72) est tournée vers un conducteur de la machine de travail, et **en ce que** dans la paroi avant (45, 77) d'au moins un des éléments de garniture (37, 42, 49, 72) est prévue une ouverture pour recevoir un élément de commande de la machine de travail (1).

7. Cabine de conduite selon une des revendications précédentes 1 ou 2, **caractérisé en ce que** la soufflante (39) aspire l'air frais par l'intermédiaire d'ouvertures d'amenée d'air (31) prévues dans le toit de cabine (23) ainsi que d'au moins un canal d'aspiration (33) s'étendant à l'intérieur d'une des colonnes arrière (20, 21, 63, 64) ou parallèlement aux colonnes arrière.

8. Cabine de conduite selon une des revendications 1 ou 2, **caractérisée en ce que** la soufflante (39) refoule l'air frais dans les canaux de répartition d'air (68) disposés dans les colonnes A (16 et 17, 61 et 62) par l'intermédiaire d'au moins une portion de conduite d'air (41) s'étendant parallèlement à un sol de cabine (14).

9. Cabine de conduite selon la revendication 1, **caractérisée en ce qu'**aux ouvertures d'amenée d'air (31) est associé un préfiltre (32).

10. Cabine de conduite selon une des revendications 1 ou 2, **caractérisée en ce que** la soufflante (39) fait partir d'une unité de chauffage, ventilation et climatisation (HVAC) (34).

11. Cabine de conduite selon la revendication 10, **caractérisée en ce qu'**à l'intérieur de l'unité HVAC (34) est disposé un filtre fin échangeable.

12. Cabine de conduite selon la revendication 1, **caractérisée en ce que** de la soufflante (39) part une conduite d'air séparée tournée en direction d'une zone de pieds de la cabine de conduite (13, 58) par l'intermédiaire d'au moins une ouverture de sortie (35) .
